(19) Europäisches Patentamt
European Patent Office
Office européen des brevets

(11) **EP 3 429 783 B1**

(12) **EUROPÄISCHE PATENTSCHRIFT**

(45) Veröffentlichungstag und Bekanntmachung des Hinweises auf die Patenterteilung:
**16.08.2023   Patentblatt 2023/33**

(21) Anmeldenummer: **17711138.2**

(22) Anmeldetag: **15.03.2017**

(51) Internationale Patentklassifikation (IPC):
**B22F 3/105** $^{(2006.01)}$     **C21D 6/00** $^{(2006.01)}$
**C22C 33/02** $^{(2006.01)}$     **B22F 3/24** $^{(2006.01)}$
**C21D 1/28** $^{(2006.01)}$     **C21D 10/00** $^{(2006.01)}$
**C22C 38/00** $^{(2006.01)}$     **C22C 38/02** $^{(2006.01)}$
**C22C 38/04** $^{(2006.01)}$     **C22C 38/42** $^{(2006.01)}$
**C22C 38/44** $^{(2006.01)}$     **B22F 10/28** $^{(2021.01)}$
**B33Y 10/00** $^{(2015.01)}$     **B22F 10/64** $^{(2021.01)}$
**B22F 10/366** $^{(2021.01)}$     B33Y 70/00 $^{(2020.01)}$

(52) Gemeinsame Patentklassifikation (CPC):
(C-Sets verfügbar)
**B22F 3/24; B22F 10/28; B22F 10/366; B22F 10/64; B33Y 70/00; C21D 1/28; C21D 6/004; C21D 10/00; C22C 33/02; C22C 38/001; C22C 38/02; C22C 38/04; C22C 38/42; C22C 38/44;**
B22F 2998/10;                                    (Forts.)

(86) Internationale Anmeldenummer:
**PCT/EP2017/056056**

(87) Internationale Veröffentlichungsnummer:
**WO 2017/157978 (21.09.2017 Gazette 2017/38)**

(54) **VERFAHREN ZUR HERSTELLUNG VON BAUTEILEN AUS EINEM DUPLEXSTAHL SOWIE MIT DEM VERFAHREN HERGESTELLTE BAUTEILE**

METHOD FOR PRODUCING COMPONENTS FROM A DUPLEX STEEL, AND COMPONENTS PRODUCED USING SAID METHOD

PROCÉDÉ DE FABRICATION DE COMPOSANTS À PARTIR D'UN RAYON DUPLEX ET COMPOSANTS FABRIQUÉS PAR LEDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2016   DE 102016003105
13.03.2017   DE 102017204099**

(43) Veröffentlichungstag der Anmeldung:
**23.01.2019   Patentblatt 2019/04**

(73) Patentinhaber: **KSB SE & Co. KGaA
67227 Frankenthal (DE)**

(72) Erfinder:
• **BÖHM, Alexander
67227 Frankenthal (DE)**
• **BRAUN, Stephan
67227 Frankenthal (DE)**
• **RAUNER, Holger
67227 Frankenthal (DE)**
• **SCHRAMM, Bernd
67227 Frankenthal (DE)**
• **STEIN, Adrian
67227 Frankenthal (DE)**

(56) Entgegenhaltungen:
**WO-A1-2015/137507     US-A1- 2013 065 073**

- **SAEIDI K ET AL: "Transformation of austenite to duplex austenite-ferrite assembly in annealed stainless steel 316L consolidated by laser melting", JOURNAL OF ALLOYS AND COMPOUNDS, Bd. 633, 14. Februar 2015 (2015-02-14), Seiten 463-469, XP029145390, ISSN: 0925-8388, DOI: 10.1016/J.JALLCOM.2015.01.249**
- **KARL DAVIDSON ET AL: "Selective Laser Melting of Duplex Stainless Steel Powders: An Investigation", MATERIALS AND MANUFACTURING PROCESSES., Bd. 31, Nr. 12, 30. September 2015 (2015-09-30), Seiten 1543-1555, XP055379622, US ISSN: 1042-6914, DOI: 10.1080/10426914.2015.1090605**

(52) Gemeinsame Patentklassifikation (CPC): (Forts.)
C21D 2211/001; C21D 2211/005; Y02P 10/25

C-Sets
B22F 2998/10, B22F 10/28, B22F 10/64

**Beschreibung**

Die Erfindung betrifft ein Verfahren zur Herstellung von Bauteilen aus einem Duplexstahl sowie mit dem Verfahren hergestellte Bauteile.

Bauteile aus Duplexstahl werden üblicherweise als Guss- oder Schmiedebauteile hergestellt, bei denen Austenit in Form von Körnern in eine Ferritmatrix eingebettet ist. In der Regel erfolgt nach dem Gießen oder Schmieden auch ein so genanntes Lösungsglühen im Temperaturbereich 850 °C bis 1180 °C zur Ausbildung von Körnern des Austenits in der Ferritmatrix. Dementsprechend können die Eigenschaften neben der Legierungszusammensetzung auch durch das Gefüge beeinflusst werden.

Es ist allgemein bekannt, dass feinkörnige Gefüge in vielen Fällen verbesserte Eigenschaften und insbesondere höhere Festigkeiten bei gleichzeitig hoher Zähigkeit aufweisen. Sehr feine Gefüge können mit der bekannten Vorgehensweise jedoch nicht erreicht werden.

Der Aufsatz "Transformation of austenite to duplex austenite-ferrite assembly in annealed stainless steel 316L consolidated by laser melting", von SAEIDI K ET AL, erschienen im JOURNAL OF ALLOYS AND COMPOUNDS, (20150214), vol. 633, zeigt ein Verfahren zur Herstellung eines austenitischen Stahls.

Der Aufsatz "Selective Laser Melting of Duplex Stainless Steel Powders: An Investigation", erschienen in MATERIALS AND MANUFACTURING PROCESSES., US, (20150930), vol. 31, no. 12, zeigt ebenfalls die Herstellung einnes austenitischen Stahls.

Desweiteren sind generative Herstellungsverfahren bei denen pulverförmiger Werkstoff lokal definiert mit einem Laserstrahl beaufschlagt wird, bekannt. Diese Vorgehensweise wird als selektives Laserschmelzen (SLM) oder auch als Lasercusing bezeichnet. Dabei wird der pulverförmige Ausgangswerkstoff schichtweise übereinander auf einem Träger aufgebracht und jede Schicht dann mit dem Laserstrahl bestrahlt, wobei der Brennfleck lokal definiert entlang einer vorgegebenen Kontur und/oder zu vorgegebenen Positionen bewegt wird. In den Bereichen der jeweiligen Schicht, die vom Brennfleck des Laserstrahls beeinflusst werden, erfolgt ein Schmelzen des pulverförmigen Werkstoffs, wodurch Partikel des pulverförmigen Werkstoffs miteinander verschmelzen. Da der Brennfleck nach diesem Schmelzvorgang weiter bewegt wird, erstarrt die Schmelze und es bildet sich in diesem Bereich ein fester Werkstoff mit einer von der jeweiligen Energiedichte und Bestrahlungszeit abhängigen Porosität. Die Porosität kann bis auf Null in diesen Bereichen reduziert werden. In nichtbestrahlten Bereichen verbleibt das lose Ausgangspulver und kann nach Fertigstellung des jeweiligen Bauteils einfach entfernt und wieder genutzt werden.

Mit den bekannten Möglichkeiten können aber keine ausreichend feinkörnigen Gefüge erhalten werden. Die Korngrößenzahl G kann Grundsätzlich nach verschiedenen Verfahren bestimmt werden, beispielsweise nach der Euronorm 103-71, der DIN EN ISO 642 oder der ASTM E112-12. Die Normen fordern einen Vergleich des Korngefüges der Probe mit standardisierten Schliffbildern, daraus wird dann eine Korngrößenklasse abgeleitet. Im Folgenden soll die Bestimmung der durchschnittlichen Korngröße nach ASTM E112-12 verwendet werden, einer internationalen Norm, die beispielsweise auch im Anhang der Euronorm 103-71 zitiert wird.

Die ASTM E112-12 definiert die Korngrößenzahl G durch die Anzahl $N_{AE}$ von Körnern, die man bei hundertfacher Vergrößerung auf einem Quadrat der Kantenlänge ein Zoll abzählen kann zu

$$N_{AE} = S^{G-1}$$

Zur Vereinfachung der Bestimmung der Korngrößenzahl werden Vergleichsbilder für die Werte G=1 bis G=10 angeboten.

Für Bauteile, die mit diesen Verfahren hergestellt sind, liegt die Korngrößenverteilung in einem zu kleinen Bereich, so dass die im Ferrit eingebetteten Austenitkörner zu groß sind, was die Festigkeit und Zähigkeit begrenzt.

Es ist daher Aufgabe der Erfindung, Möglichkeiten für die Herstellung von Bauteilen aus einem Duplexstahl, die eine erhöhte Festigkeit und Zähigkeit erreichen, anzugeben.

Erfindungsgemäß wird diese Aufgabe mit einem Verfahren, das die Merkmale des Anspruchs 1 realisiert, gelöst. Anspruch 8 betrifft ein mit dem Verfahren hergestelltes Bauteil.

Bei dem erfindungsgemäßen Verfahren wird ein pulverförmiger Ausgangswerkstoff, der aus einem Duplexstahl hergestellt worden ist, in dem mit austenitische und ferritische Phase bevorzugt mit jeweils nahezu gleichen Anteilen, sowie weiteren Legierungselementen enthalten sind, eingesetzt und mit einem Laserstrahl lokal definiert aufgeschmolzen. Es kann aber auch ein Metallpulver eingesetzt werden, bei dem bei der Herstellung ein größerer Anteil oder sogar der gesamte Austenitanteil in der Ferritphase gelöst und so eigentlich als gesonderte Austenitphase nicht nachweisbar enthalten ist. Durch eine Wärmebehandlung, auf die später noch zurück zu kommen sein wird, und die im Anschluss an das Aufschmelzen mit dem Laserstrahl am eigentlich fertig hergestellten Halbzeug bevorzugt nach der Entfernung des losen nicht verschmolzenen Pulvers durchgeführt werden kann, kann dann die Ausbildung von Ferrit- und Austenitphase erreicht werden, obwohl im Ausgangsmetallpulver kein oder nur wenig Austenitphase nachweisbar enthalten war.

Der aufgeschmolzene Werkstoff erstarrt, wenn der Laserstrahlbrennfleck (Laserspot) weiter bewegt worden ist. Dabei wird der pulverförmige Ausgangswerkstoff schichtweise auf einem Träger aufgebracht und jede einzelne Schicht nach dem Auftrag mit dem Laserstrahl beaufschlagt, so dass das Bauteil generativ sukzessive Schicht für Schicht aufgebaut wird.

Die Zusammensetzung des Bauteilwerkstoffs hat sich dabei wenn überhaupt nur geringfügig verändert. So hat sich der Ferritanteil nicht verändert, was mittels Röntgenbeugung im Phasendiagramm nachgewiesen kann. Durch Untersuchungen mit einem Raster-Elektronen-Mikroskop konnten aber keine Austenitkörner festgestellt werden. Dies ist insbesondere der sehr kurzen Zeit, in der die mit dem Laserstrahl ausgebildete Schmelze erstarrt, geschuldet.

Aus diesem Grund wird das so aufgebaute Bauteil anschließend einer Wärmebehandlung unterzogen, bei der ein Lösungsglühen von austenitischer Phase erreicht wird. Die Wärmebehandlung wird in einem Temperaturbereich für die jeweilige Maximaltemperatur zwischen 850 °C und 1100 °C durchgeführt und nach Ablauf einer vorgebbaren Haltezeit wird das Bauteil abgekühlt. Das Abkühlen sollte in kurzer Zeit schockartig durchgeführt werden, was durch ein Eintauchen in kaltes Wasser erreicht werden kann.

Durch definierte Wahl der Maximaltemperatur und/oder der Haltezeit der jeweiligen Maximaltemperatur wird die Korngröße und die Korngrößenzahl G der austenitischen Phase im fertigen Gefüge des Bauteilwerkstoffs beeinflusst. Dabei soll eine Korngrö-ßenzahl G nach ASTM von mindestens 9 eingehalten werden.

Dabei gilt generell je kleiner die Maximaltemperatur und die Haltezeit gewählt werden, je feiner kann ein Gefüge ausgebildet werden. Es sind aber Mindestbedingungen einzuhalten, da ansonsten keine Austenitkörner im Ferrit durch Diffusion gebildet werden können.

Es sollte berücksichtigt werden, dass eine höhere Korngrößenzahl G bei kleinerer Maximaltemperatur und/oder kleinerer Haltezeit der jeweiligen Maximaltemperatur erreicht werden kann.

Es sollte Haltezeit, in der die jeweilige Maximaltemperatur eingehalten wird, im Bereich 15 min bis 10 h eingehalten werden.

Dabei sollten eine Maximaltemperatur von 1000 °C bis 1075 °C $\pm$ 10 % bei der Wärmebehandlung und eine Heizrate im Bereich 150 K/h bis 250 K/h eingehalten werden.

Bei einer Haltezeit kleiner 1 h, bevorzugt $\leq 0,5$ h und einer Maximaltemperatur im Bereich 1000 °C bis 1075 °C kann eine Korngrößenzahl G von mindestens 13, bevorzugt von mindestens 14 erreicht werden.

Erfindungsgemäß sollten einige Parameter in Bestimmten Parameterbereichen gehalten werden. Beim Schmelzen des pulverförmigen Ausgangswerkstoffs sollte der Brennfleck des Laserstrahls so auf die oberste Schicht gerichtet werden, dass eine Energiedichte von mindestens 40 J/mm$^3$ bis maximal 150 J/mm$^3$ und eine Vorschubgeschwindigkeit der Bewegung des Brennflecks im Bereich 400 mm/s bis 1750 mm/s, bevorzugt 500 mm/s bis 1500 mm/s und eine Schichtdicke der einzelnen mit dem Ausgangswerkstoff gebildeten Schichten im Bereich 15 $\mu$m bis 50 $\mu$m, bevorzugt im Bereich 20 $\mu$m bis 30 $\mu$m eingehalten wird.

Bei der Herstellung sollte ein Ausgangswerkstoff eingesetzt werden, der mit austenitischer und ferritischer Phase, deren Anteile maximal 10 Vol.-% voneinander abweichen, und Legierungselementen, die ausgewählt sind aus Chrom, Molybdän, Nickel, Stickstoff, Kupfer, Kohlenstoff, Wolfram, Silicium und Mangan mit einem Summenanteil von maximal 45 Masse-%, bevorzugt maximal 40 Masse-%, besonders bevorzugt maximal 35 Masse-% gebildet ist.

Vorteilhaft ist es, wenn während der Wärmebehandlung eine ortsaufgelöste Temperaturbestimmung und eine dementsprechende lokal definierte Temperierung des jeweiligen Bauteils durchgeführt werden. Dies ist von besonderer Bedeutung bei Bauteilen mit unterschiedlichen Bereichen, die sehr unterschiedliche Wandstärken aufweisen und dementsprechend lokal differenzierte Wärmekapazitäten vorhanden sind.

So können Bereiche eines Bauteils mit größeren Volumenanhäufungen oder Wandstärken zusätzlich beheizt werden. Dies kann durch gezielt auf solche Bereiche gerichtete Strahlung, wie insbesondere Infrarotstrahlung erreicht werden. Dadurch kann erreicht werden, dass sich diese Bereiche in gleicher Weise, wie dünnwandiger ausgebildete Bereiche erwärmen und Temperaturgradienten innerhalb des Bauteils vermieden werden können. Dazu können in oder an einem herkömmlichen Ofen zusätzlich Strahler vorhanden sein, die die kritischen sich ansonsten langsamer erwärmenden Bereiche des jeweiligen Bauteils zusätzlich erwärmen.

Allein oder zusätzlich dazu können dünnwandigere Bereiche eines Bauteils auch gekühlt werden, während dickwandigere oder großvolumige Bereiche eines Bauteils nicht gekühlt oder zusätzlich erwärmt werden. Zur Kühlung können Kühlelemente in der Nähe entsprechend kritischer möglichst zu kühlender Bereiche in einem Ofen vorhanden sein. Es kann auch eine gekühlte Gasströmung auf solche dünnwandigen Bereiche gerichtet werden.

Zur lokal definierten Temperierung kann mindestens ein Temperatursensor genutzt werden, mit dem die jeweiligen Temperaturen an den verschieden dimensionierten Bereichen bevorzugt berührungslos bestimmt werden können. Dies kann beispielsweise ein verschwenk- und/oder anderweitig bewegbares Pyrometer sein. Mit den so ortsaufgelöst erfassten Temperaturmesswerten können die entsprechend angeordneten und/oder ausgerichteten Heiz- und/oder Kühlelemente entsprechend geregelt werden, so dass über das gesamte Bauteilvolumen gleiche zumindest jedoch nahezu gleiche Temperaturen zu gleichen Zeiten eingehalten werden können.

Nachfolgend soll die Erfindung anhand von Beispielen näher erläutert werden. Die dabei angegebenen Parameter können auch verändert werden, so dass aber ein Gefüge erhalten wird, das eine Mindestanzahl an austenitischen Körnern in der Ferritmatrix des fertig hergestellten Bauteils mit einer Korngrößenzahl G von mindestens 9, bevorzugt mit einer höheren Korngrößenzahl G entspricht. Dies können insbesondere andere Maximaltemperaturen und deren Haltezeiten bei der Wärmebehandlung, die zum Lösen des Austenits führt, sein.

Dabei zeigen:

Figur 1    ein Schliffbild einer Probe eines erfindungsgemäß Hergestellten Bauteils mit einer bei der Wärmebehandlung eingehaltenen Maximaltemperatur von 1065 °C, die über einen Zeitraum von 8 h gehalten worden ist;

Figur 2    ein Schliffbild einer Probe eines erfindungsgemäß hergestellten Bauteils mit einer bei der Wärmebehandlung eingehaltenen Maximaltemperatur von 1065 °C, die über einen Zeitraum von 0,5 h gehalten worden ist und

Figur 3    ein Schliffbild einer Probe eines erfindungsgemäß Hergestellten Bauteils mit einer bei der Wärmebehandlung eingehaltenen Maximaltemperatur von 1000 °C, die über einen Zeitraum von 0,5 h gehalten worden ist.

Der bei den Beispielen genutzte pulverförmige Ausgangswerkstoff unter der Handelsbezeichnung NORIDUR hatte folgende Zusammensetzung:
Kohlenstoff 0,036 Masse-%, Silicium 0,6 Masse-%, Mangan 0,63 Masse-%, Schwefel 0,015 Masse-%, Chrom 24,8 Masse-%, Nickel 7 Masse-%, Molybdän 2,32 Masse-%, Kupfer 2,93 Masse% und Stickstoff 0,18 Masse-%.

Die jeweiligen drei gezeigten Proben wurden mit einem Laserstrahl, der eine Leistung von 90 W aufweist, mit einem Abstand von nebeneinander angeordneten Spuren von 56 $\mu$m, die mit der Vorschubbewegung des Brennflecks des Laserstrahls abgedeckt worden sind, bestrahlt. Der Laserstrahl wurde so fokussiert, dass im Brennfleck eine Energiedichte von 70 J/mm$^3$ eingehalten wurde. Der Brennfleck wurde mit einer Vorschubgeschwindigkeit von 600 mm/s über die Oberfläche der jeweiligen aus dem Ausgangswerkstoff gebildeten einzelnen Schichten bewegt.

Dabei wurde eine Porosität von 0,5 % des Bauteilwerkstoffs erreicht.

Im Anschluss an den schichtweisen generativen Aufbau der Bauteile wurden unterschiedliche Parameter bei der Wärmebehandlung gewählt.

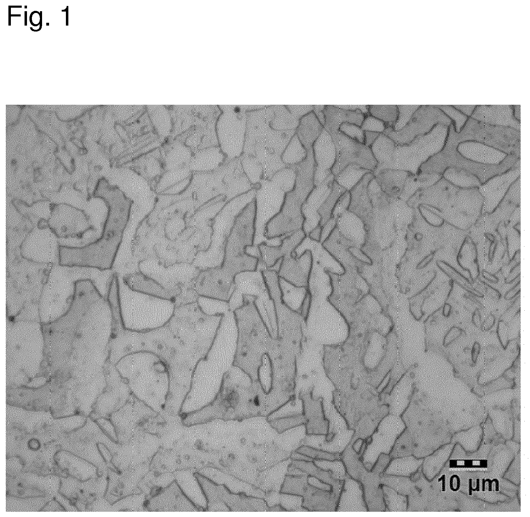

So wurde bei der in Figur 1 gezeigten Probe eine Maximaltemperatur von 1065 °C bei der Wärmebehandlung gewählt. Diese Maximaltemperatur wurde über 8h gehalten. Dies führte zu einer Korngrößenzahl G des im Ferrit eingebetteten Austenits von 11,31. Die Wärmebehandlung wurde mit einer Heizrate von 200 K/h durchgeführt. Nach Ablauf der Haltezeit von 8h wurde das wärmebehandelte Bauteil in 20 ° c warmen Wasser abgekühlt.

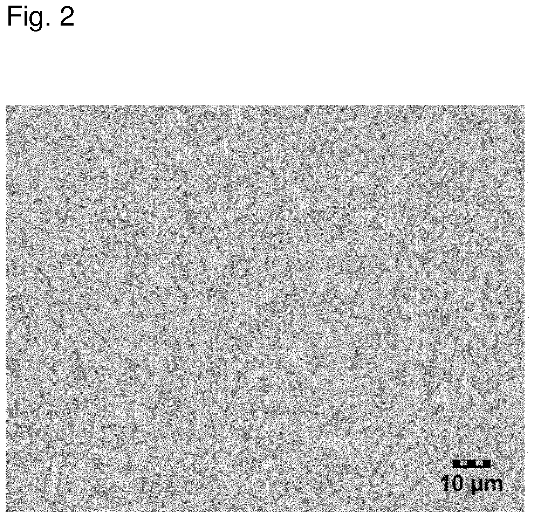

Bei der Probe deren Schliffbild in Figur 2 gezeigt ist, wurde eine Maximaltemperatur von 1065 °C bei der Wärmebehandlung gewählt. Diese Maximaltemperatur wurde über 0,5 h gehalten. Dies führte zu einer Korngrößenzahl G des im Ferrit eingebetteten Austenits von 14,14. Die Wärmebehandlung wurde mit einer Heizrate von 200 K/h durchgeführt. Nach Ablauf der Haltezeit von 0,5 h wurde das wärmebehandelte Bauteil in 20 ° C warmen Wasser abgekühlt.

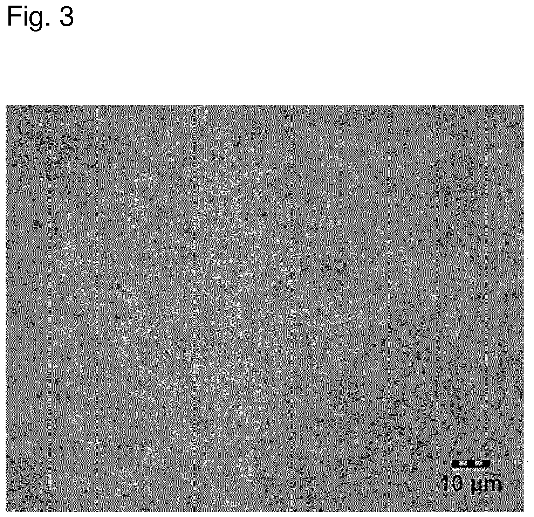

Die Probe deren Schliffbild in Figur 3 gezeigt ist, wurde eine Maximaltemperatur von 1000 °C bei der Wärmebehandlung gewählt. Diese Maximaltemperatur wurde über 0,5 h gehalten. Dies führte zu einer Korngrößenzahl G des im Ferrit eingebetteten Austenits von 14,83. Die Wärmebehandlung wurde mit einer Heizrate von 200 K/h durchgeführt. Nach Ablauf der Haltezeit von 0,5 h wurde das wärmebehandelte Bauteil in 20 ° C warmen Wasser abgekühlt.

Es ist also deutlich erkennbar, dass die Korngrößenzahl G erhöht und somit feinere Gefüge erhalten werden, wenn die bei der Wärmebehandlung eingebrachte Energiemenge reduziert wird. Es sollte jedoch eine Mindestenergie eingesetzt werden, die zum Lösen der Austenitphase aus der Ferritphase führt, und Austenitkörner in eine Ferritmatrix eingebettet werden.

**Patentansprüche**

1.   Verfahren zur Herstellung von Bauteilen aus einem Duplexstahl, wobei austenitische Phase in Form von Körnern in einer ferritischen Matrix eingebettet ist, bei dem ein pulverförmiger Ausgangswerkstoff, der aus einem Duplexstahl hergestellt worden ist und in dem austenitische und ferritische Phase, bevorzugt mit jeweils nahezu gleichen Anteilen, sowie weitere Legierungselemente enthalten sind,

mit einem Laserstrahl lokal definiert aufgeschmolzen und anschließend erstarrt, wobei der pulverförmige Ausgangswerkstoff schichtweise auf einem Träger aufgebracht und jede einzelne Schicht nach dem Auftrag mit dem Laserstrahl beaufschlagt wird, wobei beim Schmelzen des pulverförmigen Ausgangswerkstoffs der Brennfleck des Laserstrahls so auf die oberste Schicht gerichtet wird, wobei eine Energiedichte von mindestens 40 J/mm$^3$ bis maximal 150 J/mm$^3$ und

eine Vorschubgeschwindigkeit der Bewegung des Brennflecks im Bereich 400 mm/s bis 1750 mm/s, bevorzugt 500 mm/s bis 1500 mm/s und eine Schichtdicke der einzelnen mit dem Ausgangswerkstoff gebildeten Schichten im Bereich 15 $\mu$m bis 50 $\mu$m, bevorzugt im Bereich 20 $\mu$m bis 30 $\mu$m eingehalten werden, so dass das Bauteil generativ sukzessive aufgebaut wird, und

das so aufgebaute Bauteil anschließend einer Wärmebehandlung unterzogen wird, bei der ein Lösungsglühen von austenitischer Phase erreicht wird, wobei die Wärmebehandlung in einem Temperaturbereich für die jeweilige Maximaltemperatur zwischen 850 °C und 1100 °C durchgeführt wird und nach Ablauf einer vorgebbaren Haltezeit das Bauteil abgekühlt wird; und durch definierte Wahl der jeweiligen Maximaltemperatur und/oder der Haltezeit der Maximaltemperatur die Korngröße und die Korngrößenzahl G der austenitischen Phase beeinflusst wird und dabei eine Korngrößenzahl G nach ASTM von mindestens 9 eingehalten wird und der hergestellte Bauteilwerkstoff eine Porosität von 0,5 % oder weniger hat.

2. Verfahren nach Anspruch 1, **dadurch gekennzeichnet, dass** eine höhere Korngrößenzahl G bei kleinerer Maximaltemperatur und/oder kleinerer Haltezeit der jeweiligen Maximaltemperatur erreicht wird.

3. Verfahren nach einem der vorhergehenden Ansprüche, **dadurch gekennzeichnet, dass** eine Haltezeit im Bereich 15 min bis 10 h eingehalten wird.

4. Verfahren nach einem der vorhergehenden Ansprüche, **dadurch gekennzeichnet, dass** eine Maximaltemperatur von 1000 °C bis 1075 °C bei der Wärmebehandlung eingehalten wird.

5. Verfahren nach dem vorhergehenden Anspruch, **dadurch gekennzeichnet, dass** bei einer Haltezeit kleiner 1 h, bevorzugt ≤ 0,5 h und einer Maximaltemperatur im Bereich 1000 °C bis 1075 °C eine Korngrößenzahl G von mindestens 13, bevorzugt von mindestens 14 erreicht wird.

6. Verfahren nach einem der vorhergehenden Ansprüche, **dadurch gekennzeichnet, dass** ein Ausgangswerkstoff eingesetzt wird, der mit austenitischer Phase und ferritischer Phase, deren Anteile maximal 10 Vol.-% voneinander abweichen, und Legierungselementen, die ausgewählt sind aus Chrom, Molybdän, Nickel, Stickstoff, Kupfer, Kohlenstoff, Wolfram, Silicium und Mangan mit einem Summenanteil von maximal 45 Masse-% gebildet ist.

7. Verfahren nach einem der vorhergehenden Ansprüche, **dadurch gekennzeichnet, dass** während der Wärmebehandlung eine ortsaufgelöste Temperaturbestimmung und eine dementsprechende lokal definierte Temperierung des jeweiligen Bauteils durchgeführt werden.

8. Bauteil hergestellt mit einem Verfahren nach einem der vorhergehenden Ansprüche, **dadurch gekennzeichnet, dass** eine Korngrößenzahl G nach ASTM der in der ferritischen Matrix eingebetteten austenitischen Phase von mindestens 9, bevorzugt von mindestens 13, besonders bevorzugt von mindestens 14, eingehalten ist und der hergestellte Bauteilwerkstoff eine Porosität von 0,5 % oder weniger hat.

## Claims

1. Method for producing components from a duplex steel, wherein an austenitic phase is embedded in a ferritic matrix in the form of grains, in which a powder-type starting material produced from a duplex steel and containing an austenitic and ferritic phase, preferably each in approximately equal portions, as well as further alloy elements are present,

   is melted with a laser beam in a locally defined manner and subsequently hardens, wherein the powder-type starting material is applied to a substrate in layers and the laser beam is directed onto each individual layer after application, wherein in melting of the powder-type starting material, the focal point of the laser beam is directed onto the uppermost layer in such a way that an energy density of at least 40 $J/mm^3$ to a maximum of 150 $J/mm^3$, a feed rate of movement of the focal point in the range of 400 mm/s to 1750 mm/s, preferably 500 mm/s to 1500 mm/s, and a layer thickness of the individual layers formed with the starting material in the range of 15 $\mu$m to 50 pm, preferably in the range of 20 $\mu$m to 30 pm, are maintained, such that the component is additively successively constructed, and
   the component constructed in this way is subsequently subjected to a heat treatment, in which solution annealing of the austenitic phase is achieved, wherein the heat treatment is carried out in a temperature range for the respective maximum temperature of between 850°C and 1100°C and the component is cooled after a predictable dwell time has elapsed; and
   the grain size and the grain size number G of the austenitic phase are influenced by defined selection of the respective maximum temperature and/or the dwell time of the maximum temperature, and
   a grain size number G of at least 9 according to ASTM is maintained, and
   the component material produced has a porosity of 0.5% or less.

2. Method according to Claim 1, **characterized in that** a higher grain size number G is achieved at a lower maximum temperature and/or a shorter dwell time of the respective maximum temperature.

**3.** Method according to one of the preceding claims, **characterized in that** a dwell time in the range of 15 min to 10 h is maintained.

**4.** Method according to one of the preceding claims, **characterized in that** a maximum temperature of 1000°C to 1075°C is maintained in the heat treatment.

**5.** Method according to the preceding claim, **characterized in that** a grain size number G of at least 13, preferably at least 14, is achieved with a dwell time of less than 1 h, preferably ≤ 0.5 h and a maximum temperature in the range of 1000°C to 1075°C.

**6.** Method according to one of the preceding claims, **characterized in that** a starting material is used that is composed of an austenitic phase and a ferritic phase, the proportions of which deviate from one another by a maximum of 10 vol%, and alloy elements selected from chromium, molybdenum, nickel, nitrogen, copper, carbon, tungsten, silicon and manganese with a total content of a maximum of 45 wt%.

**7.** Method according to one of the preceding claims, **characterized in that** during the heat treatment, spatially resolved temperature determination and corresponding locally defined heating of the respective component are carried out.

**8.** Component produced by a method according to one of the preceding claims, **characterized in that** a grain size number G according to ASTM of the austenitic phase embedded in the ferritic matrix of at least 9, preferably at least 13, and particularly preferably at least 14, is observed, and the component material produced has a porosity of 0.5% or less.

## Revendications

**1.** Procédé pour la fabrication de pièces en acier duplex, une phase austénitique étant incorporée sous forme de grains dans une matrice ferritique, dans lequel un matériau de départ sous forme de poudre, qui a été préparé à partir d'un acier duplex et dans lequel une phase austénitique et une phase ferritique, de préférence en des proportions respectives quasiment identiques, ainsi que d'autres éléments d'alliage sont contenus, est fondu à l'aide d'un rayon laser de manière localement définie et ensuite solidifié, le matériau de départ sous forme de poudre étant appliqué par couches sur un support et chaque couche individuelle étant sollicitée après l'application par le rayon laser, où, lors de la fusion du matériau de départ sous forme de poudre, la tache focale du rayon laser est orientée sur la couche supérieure de telle sorte qu'une densité d'énergie d'au moins 40 J/mm$^3$ à au maximum 150 J/mm$^3$ et une vitesse d'avancement du déplacement de la tache focale dans la plage de 400 mm/s à 1750 mm/s, de préférence de 500 mm/s à 1500 mm/s et une épaisseur de couche des différentes couches formées à l'aide du matériau de départ dans la plage de 15 μm à 50 pm, de préférence dans la plage 20 μm à 30 pm, sont respectées, de telle sorte que la pièce est construite successivement par génération et la pièce ainsi construite est ensuite soumise à un traitement thermique, dans lequel un recuit de solution de la phase austénitique est obtenu, le traitement thermique étant réalisé dans une plage de température pour la température maximale respective entre 850°C et 1100°C et la pièce étant refroidie après l'expiration d'un temps de maintien spécifiable ; et, par le choix défini de la température maximale respective et/ou du temps de maintien de la température maximale, la grosseur de grain et l'indice granulométrique G de la phase austénitique étant influencés et un indice granulométrique G selon ASTM d'au moins 9 étant respecté et le matériau de la pièce fabriquée présentant une porosité de 0,5% ou moins.

**2.** Procédé selon la revendication 1, **caractérisé en ce qu'**un indice granulométrique G plus élevé est obtenu à une température maximale plus petite et/ou à un temps de maintien plus court de la température maximale respective.

**3.** Procédé selon l'une quelconque des revendications précédentes, **caractérisé en ce qu'**un temps de maintien dans la plage de 15 min à 10 h est respecté.

**4.** Procédé selon l'une quelconque des revendications précédentes, **caractérisé en ce qu'**une température maximale de 1000°C à 1075°C est respectée lors du traitement thermique.

**5.** Procédé selon la revendication précédente, **caractérisé en ce qu'**à un temps de maintien inférieur à 1 h, de préférence ≤ 0,5 h et à une température maximale dans la plage de 1000°C à 1075°C, un indice granulométrique G d'au moins, 13, de préférence d'au moins 14 est obtenu.

**6.** Procédé selon l'une quelconque des revendications précédentes, **caractérisé en ce qu'**on utilise un matériau de départ qui est formé avec une phase austénitique et une phase ferritique, dont les proportions divergent d'au maximum 10% en volume l'une de l'autre, et des éléments d'alliage qui sont choisis parmi le chrome, le molybdène, le nickel, l'azote, le cuivre, le carbone, le tungstène, le silicium et le manganèse en une proportion totale d'au maximum 45% en masse.

**7.** Procédé selon l'une quelconque des revendications précédentes, **caractérisé en ce que**, pendant le traitement thermique, une détermination résolue en position de la température et une régulation thermique correspondante, localement définie de la pièce respective sont réalisées.

**8.** Pièce fabriquée à l'aide d'un procédé selon l'une quelconque des revendications précédentes, **caractérisée en ce qu'**un indice granulométrique G selon ASTM de la phase austénitique incorporée dans la matrice ferritique d'au moins 9, de préférence d'au moins 13, de manière particulièrement préférée d'au moins 14, est respecté et le matériau de la pièce fabriquée présente une porosité de 0,5% ou moins.

Fig. 1

Fig. 2

Fig. 3

10 µm

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SAEIDI K et al.** Transformation of austenite to duplex austenite-ferrite assembly in annealed stainless steel 316L consolidated by laser melting. *JOURNAL OF ALLOYS AND COMPOUNDS,* 14. Februar 2015, vol. 633

- Selective Laser Melting of Duplex Stainless Steel Powders: An Investigation. *MATERIALS AND MAN-UFACTURING PROCESSES., US,* 30. September 2015, vol. 31 (12